# EUROPEAN PATENT APPLICATION

(11) **EP 2 413 574 A1**
(43) Date of publication of application: **01.02.2012**
(21) Application number: 11005258.6
(22) Date of filing: 28.06.2011
(51) Int. Cl.: H04M 1/02, H04M 1/03, H04M 1/60

(54) **Acoustic system for slide-type mobile device**

(30) Priority: 29.07.2010 US 846148
(71) Applicant: Sony Ericsson Mobile Communications AB, 221 88 Lund (SE)
(72) Inventor: Yamada, Ichiro, San Carlos, CA 94070 (US); Snyder, Thomas David, Cary, NC 27518 (US)
(74) Representative: Banzer, Hans-Jörg

(57) **Abstract**

A mobile device (100) comprises a housing (102) including a bottom section (106) and a top section (104) slidably connected to the bottom section (106) so as to be movable relative to the bottom section (106) between closed and open positions. A speaker (130) disposed within the bottom section (106) of the housing (102). An acoustic port (136, 138) extends from the speaker (130) in the bottom section (106) of the housing (102) and through the top section (104) of the housing (102) to project sound produced by the speaker (130) toward the front of the mobile device (100).

## Description

### BACKGROUND

The present invention relates generally to sound systems for mobile devices and, more particularly, to a sound system for a slide-type mobile device having two or more relatively moveable housing sections.

Mobile devices, such as mobile phones, may be designed with a variety of form factors depending on functional or aesthetic considerations. For example, a flip or clamshell type phone comprises two or more sections that are connected by hinges, allowing the phone to fold when the phone is not in use. A slider phone typically comprises two or more housing sections that slide relative to each other. A swivel phone typically comprises two or more housing sections that swivel or pivot about a central axis.

In the case of a slider phone, the top section of the housing typically includes a display, one or more input controls, and a speaker for outputting audio during voice calls. Typically, there is a separate loudspeaker disposed in the bottom section for playing back ring tones and other multimedia files. The speaker for voice calls takes up valuable and limited space within the top section of the housing and limits design flexibility. Therefore, it would be beneficial to eliminate the requirement of a separate speaker in the top section for voice calls.

Thus, it is the object of the invention to eliminate the requirement of a separate speaker in the top section for voice calls.

This object is achieved by a mobile device as defined in claim 1 and 13 and a method of processing audio signals as defined in claim 10. The dependent claims define preferred and advantageous embodiments of the present invention.

### SUMMARY

The present invention relates to sound systems for slide-type mobile devices, such as a mobile phone, having two or more sections that slide relative to one another. The mobile device includes a first speaker for outputting speech or voice during voice communications. An acoustic port extends from the speaker in the bottom section and through the top section to project sound from the top side of the mobile device. A first acoustic channel in the bottom section of the housing may convey sound from the speaker to the top surface of the bottom section. A second acoustic channel may extend from the bottom to the top surface of the top section to convey sound when the top section is in the closed position. In some embodiments, the voice speaker may also be used for playing ring tones and multimedia files, thus eliminating the need for two separate speakers.

According to another aspect of the invention, an audio processing circuit is provided to compensate for differences in the acoustic port configuration when the top section of the phone is in the open and closed positions. A sensor detects the position of the top section relative to the bottom section. Depending on the position of the top section, the audio processing circuit can vary the gain and/or frequency contact of the audio signal, depending on whether the top section is in an open or closed position.

### BRIEF DESCRIPTION OF THE DRAWINGS

Fig. 1 is a top view of an exemplary mobile device in a closed position.

Fig. 2 is a top view of an exemplary mobile device in an open position.

Fig. 3 is a section view of an exemplary mobile device in a closed position.

Fig. 4 is a functional block diagram illustrating the main components of the mobile device.

### DETAILED DESCRIPTION

Referring now to the drawings, a mobile device according to one exemplary embodiment of the present invention is shown therein and indicated generally by the numeral 100. The illustrated embodiment of the mobile device comprises a mobile phone. Those skilled in the art will appreciate that the mobile device may also comprise other devices, such as a tablet, laptop computer, audio player, or other mobile device.

The mobile device 100 comprises a housing 102 having first and second housing sections 104, 106. The first housing section 104, referred to herein as the top section, includes an electronic display 120 and control buttons 122. The electronic display 120 preferably comprises a touchscreen display, but may comprise a conventional liquid crystal display or other types of electronic displays. The second housing section 106, referred to herein as the bottom section, includes a text entry keypad 126.

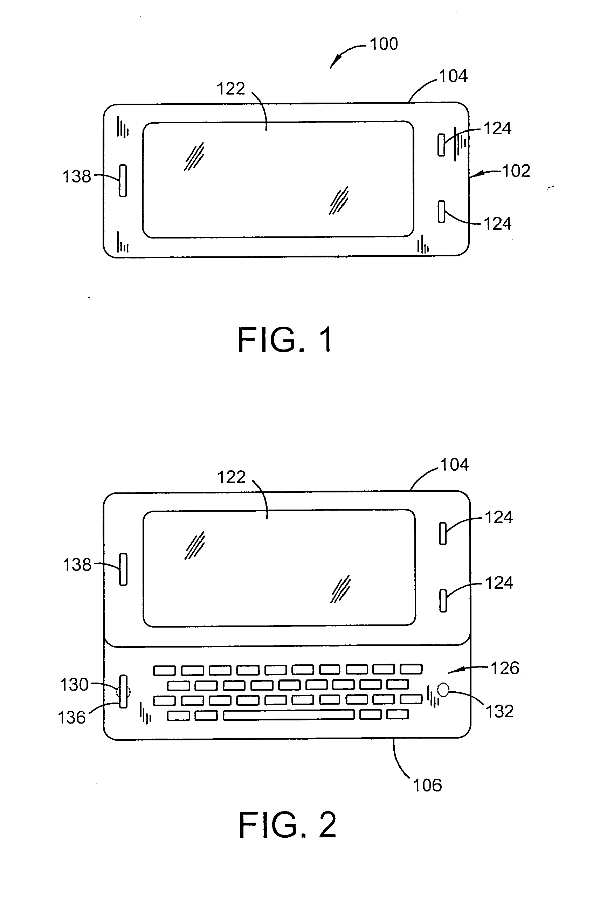

The top and bottom sections 104, 106 of the housing 102 slide relative to one another between closed (Fig. 1) and open (Fig. 2) positions. In the closed position, the keypad 126 is hidden from view, while in the open position the keypad 126 is accessible to the user. A seal or gasket 108 may be provided between the housing sections 104, 106.

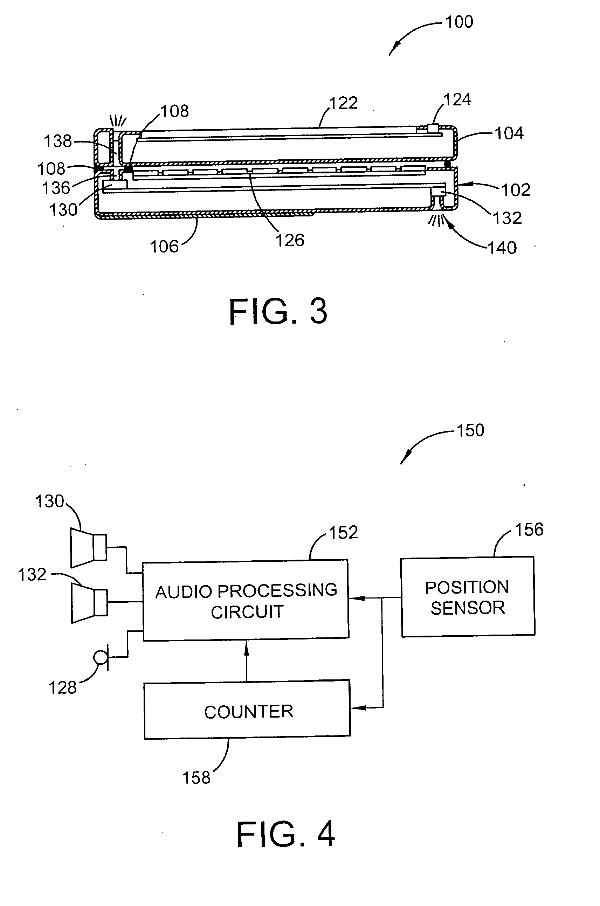

Fig. 3 is a cross-section of the mobile device 100 with the top and bottom sections 104, 106 in the closed position. As seen in Fig. 3, the mobile device 100 includes a primary speaker 130 and a secondary speaker 132 disposed within the bottom section 106 of the housing 102. The primary speaker 130 is oriented to project sound toward the front side of the mobile device 100, while the secondary speaker 132 is oriented to project sound toward the back side of the mobile device 100. An acoustic port extends from the primary speaker 130 through the top section 104 of the housing 102. The acoustic port comprises a first acoustic channel 136 in the bottom section 106 of the housing 102, and a second acoustic channel 138 in the top section 104 of the housing 102. When the top section 104 of the housing 102 is in the closed position, the acoustic channels 136, 138 are aligned. In this position, sound generated by the speaker 132 is directed by the first and second acoustic channels 136, 138 to the front side of the mobile device 100. When the top section 104 is moved to an open position, the sound generated by speaker 130 is transmitted through the first acoustic channel 136 and projects forward from the bottom section 106 of the housing 102. In some embodiments, the top section 104 may include a third acoustic channel (not shown) that aligns with the first acoustic channel 136 in the open position. A seal or gasket 108 between the housing sections 104, 106 and extending around the channel openings may be provided to prevent sound from leaking out of gaps between the housing sections 104,106.

A second acoustic port 140 is formed in the bottom section 106 of the housing 102 to project sound generated by the secondary speaker 132. The secondary speaker 132 may be used, for example, to play back multimedia sounds such as ringtones or music. In some embodiments of the invention, the primary speaker 130 may also be used to play back multimedia sounds. If speaker 130 is used for playback of multimedia sounds, speaker 132 may be eliminated so that the mobile device 100 has a single speaker.

Fig. 4 illustrates an exemplary audio circuit 150 for the mobile device 100. The audio circuit 150 comprises an audio processing circuit 152, speakers 130, 132, and microphone 154. Microphone 154 converts audible sounds into electrical signals for input to the audio processing circuit 152. Speakers 130, 132 convert audio signals output by the audio processing circuit 152 into audible sounds that can be heard by the user of the mobile device 100.

The audio processing circuit 152 may receive input from a position sensor 156 and counter 158. The position sensor 156 detects the relative positions of the top and bottom sections 104, 106 of the housing 102 and generates a position signal indicating whether the top section 104 is in the open or closed position. Based on the position of the top section 104 relative to the bottom section 106, the audio processing circuit 152 may vary a characteristic of the audio signal that is output to the speaker 130 to compensate for variation in the acoustic port configuration. For example, the audio processing circuit 152 may vary the gain or frequency content of the audio signal, depending on whether the top section 104 is in the open or closed position. Different gains may be applied to different frequencies within the audio signal.

The counter 158 counts the number of times the top section 104 is moved between the open and closed positions. Movement of the top section 104 between open and closed positions will wear the seal 108 between the top and bottom sections 104, 106, resulting in some leakage of sound from the gap between the housing sections. The audio processing circuit 152 may vary a characteristic of the audio signal output to speaker 130 to compensate for the wear of the seal. As one example, the audio processing circuit 152 may vary the gain or frequency content of audio signal, depending on the count from the counter 158.

The present invention may, of course, be carried out in other specific ways than those herein set forth without departing from the scope and essential characteristics of the invention. The present embodiments are, therefore, to be considered in all respects as illustrative and not restrictive, and all changes coming within the meaning and equivalency range of the appended claims are intended to be embraced therein.

## Claims

1. A mobile device comprising:
a housing (102) including a bottom section (106) and a top section (104) slidably
connected to the bottom section (106) so as to be movable relative to the bottom section (106) between closed and open positions;
a speaker (130) disposed within the bottom section (106) of the housing (102);
and
an acoustic port (136, 138) extending from the speaker (130) in the bottom
section (106) of the housing (102) and through the top section (104) of the housing (102) to project sound produced by the speaker (130).

2. The mobile device of claim 1 wherein the acoustic port includes a first acoustic channel (136) extending from the speaker (130) to a top surface of the bottom section (106) of the housing (102), and a second acoustic channel (138) extending through the top section (104) of the housing (102) that aligns with the first acoustic channel (136) when the top section (104) of the housing (102) is in the closed position.

3. The mobile device of claim 2 wherein the acoustic port is configured so that sound generated by the speaker (130) projects forward from the first acoustic channel (136) when the top section (104) of the housing (102) is in the closed position, and projects forward from the second acoustic channel (138) when the top section (104) of the housing (102) is in the open position.

4. The mobile device of any one of claims 1-3 further comprising an audio processing circuit (152) configured to process an audio signal sent to the speaker (130) depending on the position of the top section (104) to compensate for differences in the acoustic port (136, 138) configuration when the top section (104) is moved between open and closed positions.

5. The mobile device of claim 4 wherein the audio processing circuit (152) varies a gain of the audio signal depending on whether the housing (102) is in the open or closed position.

6. The mobile device of claim 4 or 5 further comprising a seal (108) between the top and bottom sections (104, 106) of the housing (102), and wherein the audio processing circuit (152) is further configured to process the audio signal sent to the speaker (130) to compensate for wear of the seal (108).

7. The mobile device of any one of claims 4-6 wherein the audio processing circuit (152) varies a gain of the audio signal depending on a number of times the top section (104) has been moved between open and closed positions.

8. The mobile device of any one of claims 1-7 configured as a mobile phone wherein said speaker (130) is configured to output speech during voice calls.

9. The mobile device of any one of claims 1-8 wherein said speaker is also configured to playback audible media.

10. In a mobile device comprising first and second relatively movable housing sections (104, 106) movable between closed and open positions, a speaker (130) disposed within one housing section (106), and an acoustic port (136, 138) whose configuration varies depending on the relative position of the first and second housing sections (104, 106) for projecting sounds generated by said speaker (130), a method of processing audio signals sent to the speaker (130), said method comprising:
detecting a relative position of the housing sections (104, 106); and
varying a characteristic of an audio signal sent to said speaker (130) depending
on the position of the housing sections (104, 106) to compensate for differences in the configuration of the acoustic port (136, 138) when the housing sections (104, 106) are in the open and closed positions respectively.

11. The method of claim 10 varying a characteristic of an audio signal sent to said speaker (130) depending on the position of the housing sections (104, 106) comprises varying a gain of the audio signal.

12. The method of claim 11 further comprises:
counting a number of times the housing sections (104, 106) are moved between
open and closed positions;
varying a characteristic of the audio signal sent to said speaker (130) depending
on said count to compensate for wear of a seal (108) between said first and second housing sections (104, 106).

13. In a mobile device comprising:
first and second relatively movable housing sections (104, 106) movable between
closed and open positions;
a speaker (130) disposed within one housing section (106);
an acoustic port (136, 138) whose configuration varies depending on the relative
position of the first and second housing sections (104, 106) for projecting sounds generated by said speaker (130);
a sensor (156) to detect a relative position of the housing sections (104, 106);
and
an audio processing circuit (152) configured to vary a characteristic of an audio
signal sent to said speaker (130) depending on the position of the housing sections (104, 106) to compensate for differences in the configuration of the acoustic port (136, 138) when the housing sections (104, 106) are in the open and closed positions respectively.

14. The mobile device of claim 13 wherein the audio processing circuit (152) is configured to vary a gain of the audio signal.

15. The mobile device of claim 13 or 14 further comprising a counter to count a number of times the housing sections (104, 106) are moved between open and closed positions; and wherein the audio processing circuit (152) is further configured to vary a characteristic of the audio signal sent to said speaker (130) depending on said count to compensate for wear of a seal (108) between said first and second housing sections (104, 106).
